# EUROPÄISCHE PATENTSCHRIFT

(11) **EP 1 725 442 B1**
(45) Veröffentlichungstag und Bekanntmachung des Hinweises auf die Patenterteilung: **27.02.2008**
(21) Anmeldenummer: 05715039.3
(22) Anmeldetag: 01.03.2005
(51) Int. Cl.: B62D 25/04, B60J 5/04

(54) **VERFAHREN ZUM ERHÖHEN DER CRASHFESTIGKEIT EINES KRAFTFAHRZEUGS UND DAMIT EINGESETZTES BLOCKELEMENT**
METHOD FOR INCREASING THE CRASH RESISTANCE OF A MOTOR VEHICLE, AND BLOCK ELEMENT USED THEREWITH
PROCEDE PERMETTANT D'ACCROITRE LA RESISTANCE A LA COLLISION D'UN VEHICULE AUTOMOBILE

(30) Priorität: 09.03.2004 DE 102004011786
(43) Veröffentlichungstag der Anmeldung: 29.11.2006
(73) Patentinhaber: Wilhelm Karmann GmbH, 49084 Osnabrück (DE)
(72) Erfinder: ABRAHAM, Frank, 49086 Osnabrück (DE); KLUMPE, Stefan, 49134 Wallenhorst (DE)
(86) Internationale Anmeldenummer: PCT/DE2005/000338
(87) Internationale Veröffentlichungsnummer: WO 2005/087572

(56) Entgegenhaltungen:
- EP-A- 0 779 171
- EP-A- 0 818 339
- PATENT ABSTRACTS OF JAPAN Bd. 2003, Nr. 08, 6. August 2003 (2003-08-06) & JP 2003 095034 A (NISSAN MOTOR CO LTD), 3. April 2003 (2003-04-03)

## Beschreibung

Die Erfindung betrifft ein Verfahren zum Erhöhen der Crashfestigkeit eines Kraftfahrzeugs im Bereich der vorderen Karosseriesäule (A-Säule) insbesondere im Hinblick auf Kräfte, die im Zusammenhang mit einem versetzten Frontaufprall (Offset-Crash) auf die Karosserie einwirken. Die Erfindung bezieht sich außerdem auf ein Blockelement, wie es bei einem derartigen Verfahren zum Einsatz kommt, und auf ein mit einem derartigen Blockelement ausgestattetes Kraftfahrzeug. Eine derartige Konstruktion ist aus EP 0818339 bekannt.

Zukünftig zu erwartende Anforderungen an die Festigkeit von Kraftfahrzeugkarosserien (Crashanforderungen) insbesondere im Hinblick auf sogenannte Offset-Crash-Situationen gehen dahin, daß mit konstruktiven Mitteln erreicht werden soll, daß selbst nicht angeschnallte Personen auf den Vordersitzen in einer derartigen Unfallsituation nicht mit dem Kopf auf die A-Säule treffen können (Kopfaufprallschutz). Zur Erfüllung dieser Sicherheitsanforderung muß sichergestellt sein, daß bei einem Frontalaufprall die A-Säule nicht oder nicht nennenswert in den Innenraum hinein verformt wird. Dies kann dadurch erreicht werden, daß ein im -Zuge der Herstellung der Karosserie praktisch unvermeidlicher Spalt bzw. Zwischenraum zwischen einer vorderen Stirnseite einer Vordertür und einer gegenüberliegenden Außenseite der A-Säule mit einem als Crashabstützung wirkenden Blockelement zumindest teilweise überbrückt wird, so daß sich die A-Säule insbesondere bei einem versetzten Frontalaufprall bereits nach Durchlaufen eines minimalen Verformungswegs frühzeitig an die Stirnseite der Tür anlegt und an dieser abgestützt wird, so daß auf diese Weise eine Übertragung der Aufprallkräfte über die Tür in hintere Bereiche der Karosserie möglich ist. Die Tür bzw. die Türen sind dabei ebenfalls durch bauseitige Maßnahmen wie Schachtverstärkung und Seitenaufprallverstärkungen ausreichend verstärkt, um die auftretenden Kräfte sicher aufnehmen und übertragen zu können. Durch die beschriebene Maßnahme wird eine Bewegung bzw. Deformation der A-Säule, vor allem von deren oberem Teil, in den Fahrzeuginnenraum vermieden oder auf Minimum reduziert, so daß auch das Risiko von Kopfverletzungen durch Aufschlag durch eine verformte A-Säule entscheidend gesenkt wird. Allerdings ist die Anordnung des genannten Blockelements mit einem relativ großen Anpassungsaufwand verbunden, wobei häufig das Blockelement den Zwischenraum nicht optimal überbrückt und als Folge davon ein nicht unerhebliches Risiko von Kopfverletzungen verbleibt.

Die Aufgabe der Erfindung besteht darin, ein verbessertes Verfahren zum Erhöhen der Crashfestigkeit eines Kraftfahrzeugs zu schaffen, bei dem in einem Zwischenraum zwischen einer vorderen, einer A-Säule benachbarten Stirnseite einer seitlichen Fahrzeugtür und einer dieser gegenüberliegenden Außenseite der A-Säule ein den Zwischenraum bei geschlossener Fahrzeugtür überbrückendes Blockelement angeordnet wird, wobei insbesondere auch die Montage erleichtert sein soll.

Diese Aufgabe wird erfindungsgemäß durch ein derartiges Verfahren gelöst, welches sich durch folgende Schritte auszeichnet: Bereitstellen eines Blockelements, das zwei Blockteile aufweist, die so miteinander verbunden sind, daß sie in einem Ausgangszustand unter Einwirkung einer Einstellkraft relativ zueinander verlagerbar sind, wodurch eine Längenabmessung des Blockelements einstellbar ist, und die relativ zueinander fixierbar sind (Einbauzustand), so daß eine in Richtung der Längenabmessung oder Kraftaufnahmerichtung einwirkende, bei einem Aufprall auftretende Kraft aufnehmbar ist; Anbringen des Blockelements bei geöffneter Fahrzeugtür, wobei eines der Blockteile an der Stirnseite der Fahrzeugtür oder an der Außenseite der A-Säule befestigt wird und wobei die Blockteile relativ zueinander so angeordnet sind, daß das Blockelement eine größere Längenabmessung aufweist als der Zwischenraum bei geschlossener Fahrzeugtür; Schließen der Fahrzeugtür, wobei das andere Blockteil an die A-Säule oder Fahrzeugtür anstößt und die Blockteile selbsttätig relativ zueinander in eine Montageposition verlagert werden, in der sie bei geschlossener Fahrzeugtür den Zwischenraum im wesentlichen vollständig überbrücken; und Fixieren der Blockteile relativ zueinander in der Montageposition.

Zweckmäßigerweise weisen die Blockteile im wesentlichen ebene Außenflächen auf, mit denen sie gegen die Fahrzeugtür und die A-Säule anliegen oder dieser mit geringem Abstand gegenüberstehen. Um den Einstellvorgang beim Schließen der Fahrzeugtür zu erleichtern, kann vorgesehen sein, daß das nicht am Fahrzeug (A-Säule oder Fahrzeugtür) befestigte Blockteil an seiner Außenfläche leicht ballig (nach außen konvex) geformt ist, damit das Blockteil beim Schließen der Fahrzeugtür auf der gegenüberliegenden Fläche, entweder der Fahrzeugtür oder A-Säule, abwälzen kann und sich leichter in die Montageposition bewegen läßt. In jedem Falle ist es zweckmäßig, wenn die Außenflächen der Blockteile im wesentlichen parallel sind.

Eine vorteilhafte Ausführungsform zeichnet sich dadurch aus, daß die Blockteile keilartig ausgebildet sind, wobei die Längenabmessung des Blockelements eingestellt wird, indem die Blockteile unter einem Winkel zur Kraftaufnahmerichtung des Blockelements relativ zueinander verlagert werden.

Ferner können die Blockteile ineinandergreifende Bereiche aufweisen, entlang der sie relativ zueinander verlagert werden, um die Längenabmessung des Blockelements einzustellen.

Bevorzugt ist vorgesehen, daß die Blockteile mittels mindestens einer Schraube in der Montageposition relativ zueinander fixiert werden. Hierbei ist es besonders günstig, wenn mit der mindestens einen Schraube das Blockelement gleichzeitig an der Fahrzeugtür oder der A-Säule angebracht wird.

Alternativ oder zusätzlich kann vorgesehen sein, daß die Blockteile durch Schweißen in der Montageposition relativ zueinander fixiert werden. Auch könnte eines der Blockteile an der Fahrzeugtür oder der A-Säule angeschweißt werden.

Zweckmäßigerweise wird vor dem Fixieren auf dem anderen, d.h. dem nicht angebrachten Blockteil eine Abstandsfolie aufgebracht, die beispielsweise aus Kunststoff oder Gummi bestehen kann, eine Dicke von 1 mm oder 2 mm hat (je nach Bedarf) und nach dem Fixieren der Blockteile entfernt wird, um einen definierten minimalen Abstand von bspw. 1 oder 2 mm zwischen Blockelementoberfläche und benachbarter lackierter Oberfläche (A-Säule oder Fahrzeugtür) zu gewährleisten.

Gegenstand der Erfindung ist weiterhin ein Blockelement als Crashabstützung bei einem Kraftfahrzeug zum Überbrücken eines Zwischenraums zwischen einer vorderen, einer A-Säule benachbarten Stirnseite einer seitlichen Fahrzeugtür und einer dieser gegenüberliegenden Außenseite der A-Säule, mit zwei Blockteilen, die so miteinander verbunden sind, daß sie in einem Ausgangszustand unter Einwirkung einer Einstellkraft relativ zueinander verlagerbar sind, wodurch eine Längenabmessung des Blockelements einstellbar ist, und die relativ zueinander in einer Montageposition fixierbar sind, so daß in einem Einbauzustand eine in Richtung der Längenabmessung oder Kraftaufnahmerichtung einwirkende, bei einem Aufprall auftretende Kraft aufnehmbar ist.

In einer Variante kann eine zwischen den Blockteilen angeordnete, vorgespannte Feder vorgesehen sein, durch die die Blockteile in eine Stellung vorgespannt sind, in der das Blockelement eine maximale Längenabmessung aufweist.

Zweckmäßigerweise haben die Blockteile im wesentlichen ebene oder eine ebene und eine leicht ballig (nach au-ßen konvex) geformte Außenfläche(n), mit denen sie gegen die Fahrzeugtür und die A-Säule anliegen oder dieser mit minimalem Abstand gegenüberliegen. Zweckmäßigerweise sind die Außenflächen im wesentlichen parallel zueinander.

Bevorzugt ist vorgesehen, daß die Blockteile keilartig ausgebildet sind, wobei die Längenabmessung des Blockelements durch Verlagerung der Blockteile relativ zueinander unter einem Winkel zur Kraftaufnahmerichtung einstellbar ist. Zusammenwirkende Keilflächen oder sonstige Flächen, entlang denen die Blockteile verlagerbar sind, können mit Rastvorsprüngen wie Riffelungen o.ä. versehen sein, um nach der Fixierung eine unerwünschte Verlagerung zu verhindern.

Es kann zweckmäßig sein, wenn die Blockteile ineinandergreifende Bereiche aufweisen, entlang der sie relativ zueinander verlagerbar sind, wodurch die Längenabmessung des Blockelements einstellbar ist.

Bevorzugt ist vorgesehen, daß die Blockteile mittels mindestens einer Schraube in der Montageposition relativ zueinander fixierbar sind. Besonders günstig ist es, wenn das Blockelement mit der mindestens einen Schraube gleichzeitig an der Fahrzeugtür oder der A-Säule anbringbar ist.

Alternativ oder zusätzlich kann vorgesehen sein, daß die Blockteile durch Schweißen in der Montageposition relativ zueinander fixierbar sind.

Die Erfindung bezieht sich weiterhin auf ein Kraftfahrzeug mit einer hinter einer A-Säule angeordneten seitlichen Fahrzeugtür, bei dem in einem Zwischenraum zwischen einer vorderen Stirnseite der Fahrzeugtür und einer dieser gegenüberliegenden Außenseite der A-Säule ein den Zwischenraum bei geschlossener Fahrzeugtür überbrückendes Blockelement als Crashabstützung angeordnet ist, wobei sich das Kraftfahrzeug durch ein erfindungsgemäßes Blockelement auszeichnet, wobei eines der Blockteile an der Stirnseite der Fahrzeugtür oder an der Außenseite der A-Säule befestigt ist und das Blockelement den Zwischenraum bei geschlossener Fahrzeugtür vollständig überbrückt.

Weitere Vorteile und Merkmale der Erfindung ergeben sich aus der nachfolgenden Beschreibung von Ausführungsbeispielen, wobei auf eine Zeichnung Bezug genommen wird, in der
Fig. 1 eine schematische perspektivische Ansicht eines Kraftfahrzeugs zeigt, das mit einem erfindungsgemäßen Blockelement als Crashabstützung versehen ist,
Fig. 2 eine schematische perspektivische Ansicht des Bereichs des Blockelements aus Fig. 1 in einem vergrö-ßerten Maßstab zeigt,
Fig. 3 eine ähnliche Ansicht wie Fig. 2 in nochmals vergrößertem Maßstab zeigt,
Fig. 4 bis 6 unterschiedliche Ansichten des in Fig. 1 bis 3 dargestellten erfindungsgemäßen Blockelements zeigen,
Fig. 7 eine Variante der Erfindung in einer schematischen Ansicht im Horizontalschnitt zeigt, und
Fig. 8 eine weitere Variante der Erfindung in einer schematischen Ansicht im Horizontalschnitt zeigt.

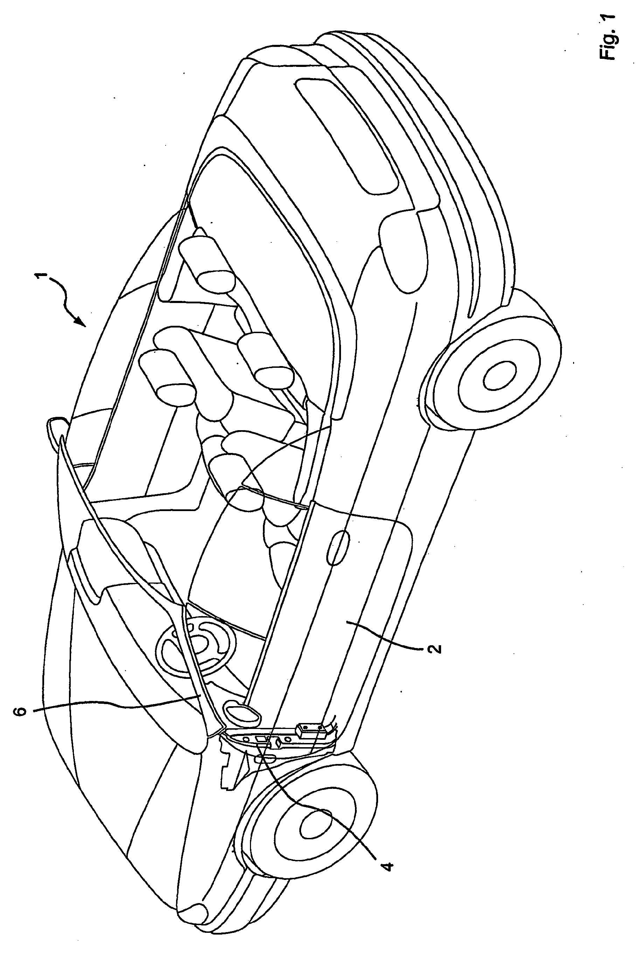

Zunächst sei auf Fig. 1 bis 3 Bezug genommen, in denen in vereinfachten schematischen Darstellungen ein mit einem erfindungsgemäßen Blockelement ausgestattetes Kraftfahrzeug dargestellt ist und anhand derer auch das erfindungsgemäße Verfahren erläutert wird.

Fig. 1 zeigt in einer schematischen perspektivischen Ansicht ein Kraftfahrzeug 1 mit einer seitlichen Fahrzeugtür 2 und einer in deren vorderem Bereich angeordneten A-Säule 4, die in ihrem oberen Bereich in Form eines Windschutzscheibenrahmens 6 weitergeführt ist. Konstruktiv bedingt befindet sich allseitig zwischen der Fahrzeugtür 2 und angrenzenden Karosseriebereichen, also auch insbesondere im Bereich der A-Säule 4, ein Spalt bzw. Zwischenraum, der einerseits unvermeidlich ist, um unerwünschte Berührungen zwischen Fahrzeugtür und Karosserie zu vermeiden, und der andererseits zur Aufnahme von Dichtungen dient.

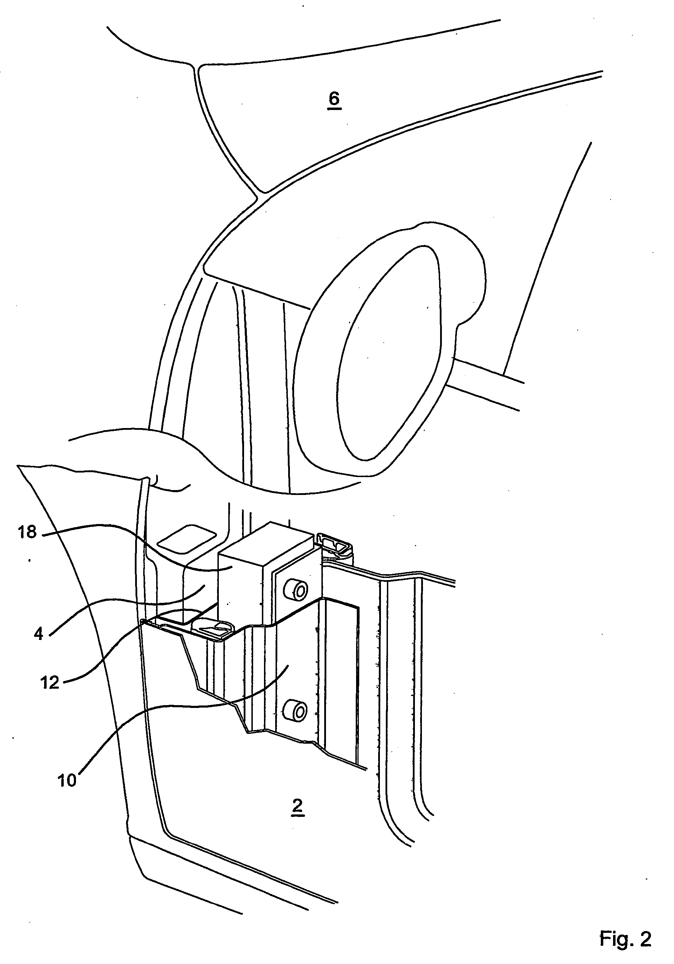

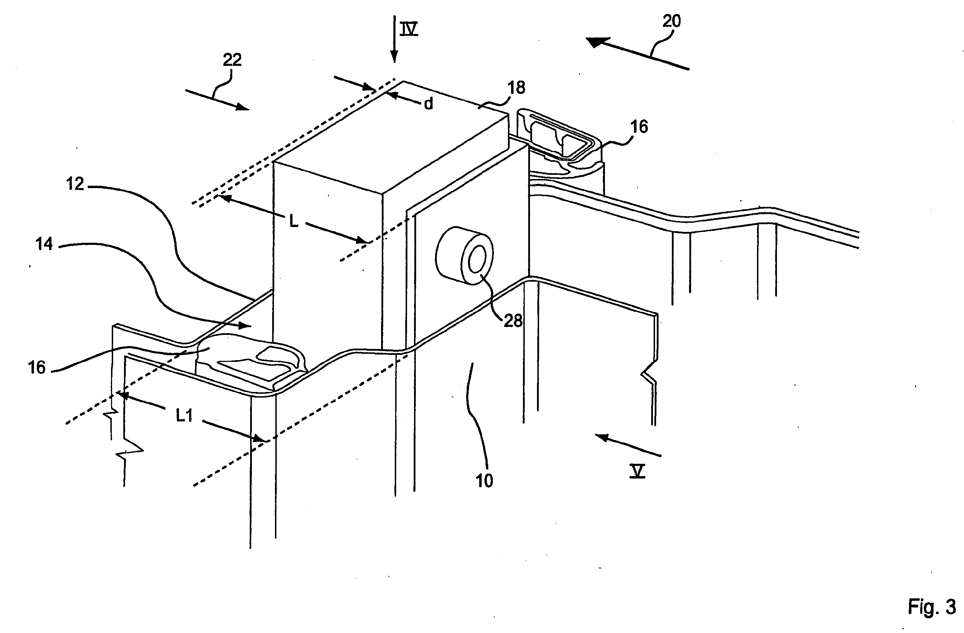

Wie Fig. 2 und 3 zeigen, befindet sich zwischen einer vorderen Stirnseite 10 der Fahrzeugtür 2 und einer gegenüberliegenden (entgegen der Fahrtrichtung 20 weisenden) Außenseite 12 der A-Säule 4 ein derartiger Zwischenraum 14, in dessen seitlichen Bereichen Dichtungen 16 angeordnet sind.

Wie insbesondere Fig. 3 deutlich zeigt, befindet sich in dem Zwischenraum 14 ein erfindungsgemäßes Blockelement 18, das so angepaßt ist, daß seine Längenabmessung L (in Fahrtrichtung 20 gemessen) mit der entsprechenden Längenabmessung L1 des Zwischenraums 14 praktisch übereinstimmt, d.h. L1 ist gleich L zuzüglich eines definierten kleineren Abstands d von etwa 1 bis 2 mm, so daß das Blockelement 18 den Zwischenraum 14 in Längsrichtung bzw. Fahrtrichtung 20 gesehen nahezu vollständig überbrückt und einerseits an der vorderen Stirnseite 10 der Fahrzeugtür 2 und andererseits fast an der Außenseite 12 der A-Säule 4 anliegt, wenn die Fahrzeugtür 2 geschlossen ist. Dadurch ist gewährleistet, daß bei einem Unfall auftretende und entgegen der Fahrtrichtung 20 (Kraftaufnahmerichtung 22) einwirkende Kräfte von der A-Säule unmittelbar über das Blockelement auf die Fahrzeugtür 2 übertragbar sind und dadurch abgefangen werden können, so daß die A-Säule im wesentlichen ihre aufrechte Position beibehält.

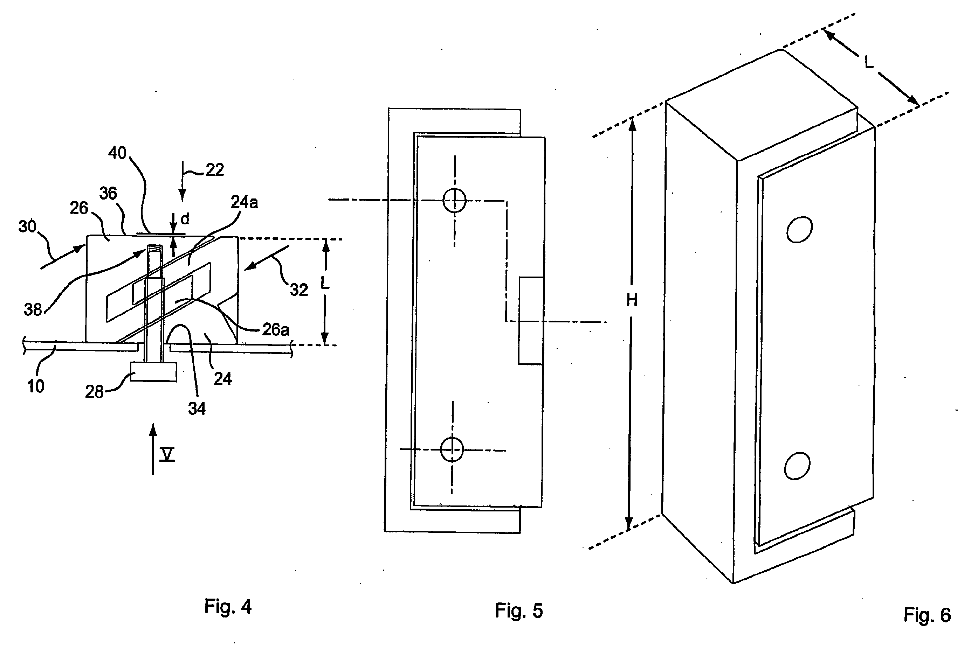

Zur Erläuterung des Blockelements 18 sei auf Fig. 4 bis 6 Bezug genommen, in denen eine Ausführungsform in verschiedenen Ansichten dargestellt ist. Fig. 4 zeigt eine Draufsicht von oben in Richtung IV in Fig. 3, während Fig. 5 eine Seitenansicht in Richtung V in Fig. 3 und 4 und Fig. 6 eine perspektivische Ansicht entsprechend Fig. 3 zeigt.

Das Blockelement 18 besteht aus zwei Blockteilen 24 und 26, die keilartig ineinandergreifende Bereiche 24a, 26a aufweisen und mit einer Befestigungsschraube 28 aneinander und relativ zueinander fixierbar sowie an der Stirnseite 10 der Fahrzeugtür 2 befestigbar sind. Wie man Fig. 4 entnimmt, können die Blockteile 24, 26 in einem Ausgangszustand bei lose eingedrehter oder leicht angezogener Befestigungsschraube 28 in Pfeilrichtung 30, 32 relativ zueinander verlagert werden, wodurch der gegenseitige Abstand von Außenflächen 34, 36 der Blockteile, der der Längenabmessung L entspricht, vergrößert werden kann. Umgekehrt kann durch Auseinanderrücken der Blockteile entgegen der Richtungen 30, 32 der gegenseitige Abstand der Außenflächen (Längenabmessung) verkleinert werden, bis der in Fig. 4 dargestellte Zustand kleinster Längenabmessung L erreicht ist. In jeder Verlagerungsposition kann die eingestellte Längenabmessung L durch Festziehen der Befestigungsschraube(n) 28 fixiert werden (Einbauzustand), wobei durch die keilförmige Ausbildung und ggf. Rastmittel wie Riffelungen o.ä. auf den Keilflächen sichergestellt ist, daß auch große, in Kraftaufnahmerichtung 22 auf die Außenflächen 34, 36 einwirkende Kräfte sicher aufgenommen werden können, ohne daß eine erneute Verlagerung der Blockteile relativ zueinander eintritt.

Fig. 4 zeigt andeutungsweise eine Feder 38, die zwischen den Blockteilen wirkt und diese in eine Stellung vorspannt, in der das Blockelement seine maximale Längenabmessung einnimmt, in jedem Fall aber eine Längenabmessung, die größer ist als L1 oder zumindest gleich groß.

Wie Fig. 1 andeutungsweise zu entnehmen ist, ist es zweckmäßig, das Blockelement 18 im Bereich zwischen einem oberen und unteren Türscharnier unterzubringen, um einerseits eine möglichst hohe Anbringungsposition zu erzielen, weil die zu erwartenden Kräfte weiter oben über die Türbrüstung am besten aufgenommen werden können. Eine Höhe H des Blockelements 18, wie in Fig. 6 angedeutet, sollte daher einem möglichst großen Teil der gesamten Türhöhe entsprechen, beispielsweise 50 %, 60 % oder auch 75 % oder mehr.

Das erfindungsgemäße Blockelement wird wie folgt in ein Kraftfahrzeug eingebaut. Vor dem Einbau des Blockelements wird die Fahrzeugtür 2 in den Karosserierohbau eingebaut und auf ihren Fugenverlauf passend zur Rohrkarosserie eingestellt. Anschließend wird das Blockelement an der Stirnseite 10 der Fahrzeugtür im Ausgangszustand vormontiert, d.h. die Befestigungsschraube(n) 28 wird (werden) leicht angezogen, so daß die Blockteile an der Tür angebracht sind, sich aber durch eine gewisse, in Kraftaufnahmerichtung 22 wirkende Einstellkraft (Fig. 4) noch relativ zueinander verlagern lassen. Alternativ zu einem leichten Anziehen der Schraube(n) 28 kann eine Feder 38 vorgesehen sein. Ein Abstandsstreifen 40 (Fig. 4) wird auf die freie Außenseite 36 des Blockteils 26 aufgebracht.

Dabei wird eine Längenabmessung L eingestellt, die größer ist als die entsprechende Längenabmessung L1 des Zwischenraums 14. Danach wird die Fahrzeugtür 2 geschlossen, wobei das zur A-Säule 4 weisende Blockteil 26 mit seiner Außenfläche 36 bzw. dem Abstandsstreifen 40 gegen die Außenseite 12 der A-Säule 4 zur Anlage kommt, bevor die Tür vollständig geschlossen ist. Durch weiteres Schließen der Tür wird eine in Kraftaufnahmerichtung 22 wirkende Einstellkraft erzeugt, durch die das Blockteil 26 entgegen der in Fig. 4 angegebenen Pfeilrichtung 30 relativ zu dem mit der Tür verbundenen Blockelement 24 verlagert wird und die Längenabmessung L des Blockelements (ggf. einschließlich Abstandsstreifen) selbsttätig verringert wird, bis sie bei vollständig geschlossener Tür praktisch exakt der Längenabmessung L1 des Zwischenraums 14 entspricht.

Danach wird die Fahrzeugtür geöffnet und der Einbauzustand hergestellt, d.h. die Befestigungsschraube(n) 28 werden fest angezogen. Sollte sich hierbei aufgrund eines zwischen den Blockteilen 24, 26 vorhandenen Spiels eine merkliche Verringerung der Längenabmessung L des Blockelements 18 ergeben, kann so vorgegangen werden, daß bei der Einstellung die Fahrzeugtür 2 nicht vollständig geschlossen wird, wobei auf diese Weise ggf. auch ein geringfügiges Übermaß der Längenabmessung des Blockelements gegenüber der des Zwischenraums erzeugt werden kann, um eine absolut spiel- bzw. spaltfreie Überbrückung des Zwischenraums 14 bei vollständig geschlossener Tür zu erreichen. Danach wird die Abstandsfolie bzw. der Abstandsstreifen 40 entfernt, um einen minimalen Spalt von ca. 1 bis 2 mm (nach Bedarf) zu erhalten, der eine Lackschädigung und Geräuschbildung verhindert.

Durch die selbsttätige Einstellung der Längenabmessung des Blockelements während der Montage wird eine erhebliche Zeiteinsparung erreicht, da ein aufwendiges Messen und Einstellen in der Produktion umgangen wird.

Alternativ zu der vorstehend beschriebenen Ausführungsform eines Blockelements der Höhe H könnte die Anordnung mehrerer kürzerer Blockelemente vorgesehen sein, was insbesondere dann zweckmäßig sein kann, wenn sich die Längenabmessung L1 des Zwischenraums 14 über dessen Höhe ändert. Ferner könnte vorgesehen sein, zusätzlich zu einem zwischen den Türscharnieren angebrachten Blokkelement ein zusätzliches, oberhalb des oberen Türscharniers befindliches Blockelement anzuordnen, was aufgrund der erfindungsgemäßen, wenig zeitaufwendigen Montage durchaus vertretbar sein kann.

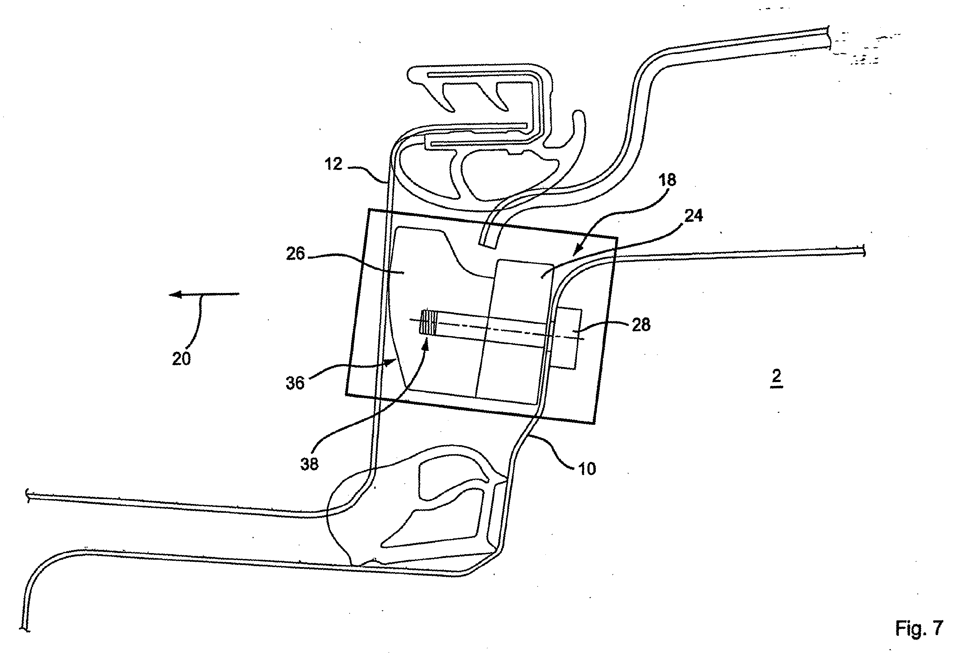

Fig. 7 zeigt eine Abwandlung eines erfindungsgemäßen Blockelements 18, bei dem das vordere, der A-Säule 4 zugewandte Blockteil 26 keine ebene, sondern eine ballig geformte Außenfläche 36 aufweist. Der Grund hierfür liegt darin, daß die Schwenkachse der Fahrzeugtür 2, um die diese beim Schließen, d.h. beim Einstellvorgang des Blockelements 18, gedreht wird, relativ nah an dem Blockelement 18 liegt, so daß es zu ungünstigen Anlageverhältnissen der Außenfläche 36 kommen kann, wenn diese parallel zur Außenfläche 34 des an der Fahrzeugtür 2 befestigten Blockteils 24 ausgebildet ist, wie dies in Fig. 2 bis 6 dargestellt ist. Die ballige, nach außen konvexe Form der Außenfläche 36 nach Fig. 7 stellt somit einen Kompromiß zwischen guter Einstellbarkeit und großer, zur Verfügung stehender Anlagefläche gegen die A-Säule 4 dar.

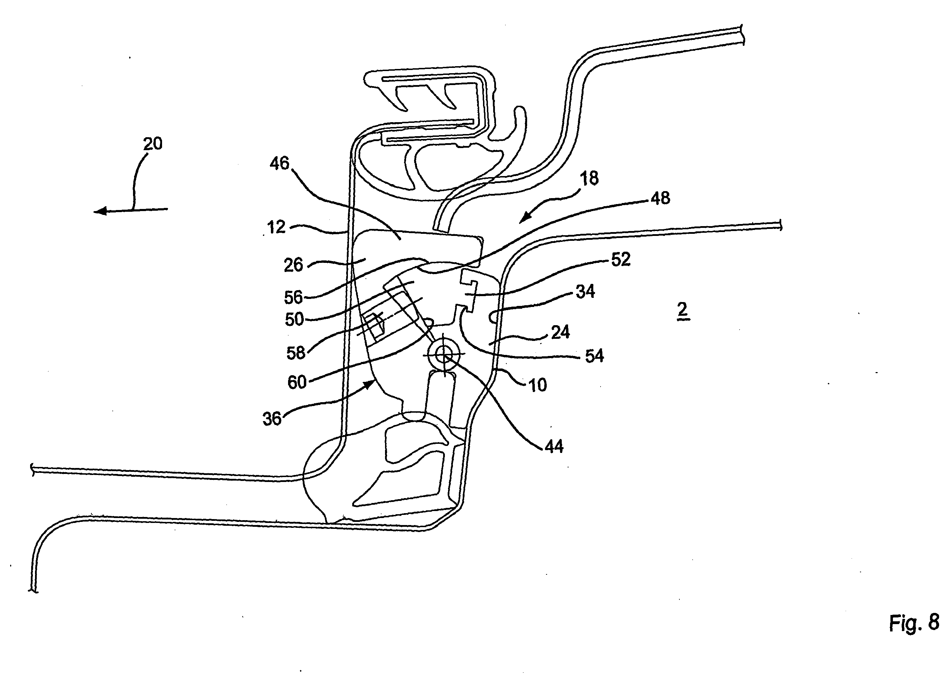

Fig. 8 zeigt in einer Fig. 7 entsprechenden Ansicht eine weitere Variante eines erfindungsgemäßen Blockelementes 18, bei dem im Unterschied zu den zuvor beschriebenen Ausführungsformen keine lineare, sondern eine schwenkende Verlagerung der beiden Blockteile relativ zueinander vorgesehen ist. Ein erstes Blockteil 24 ist in nicht näher dargestellter Weise, bspw. mittels Schrauben oder durch Schweißen, mit der vorderen Stirnseite 10 der Fahrzeugtür 2 verbunden, während ein zweites Blockteil 26 durch eine Scharnierachse 44 (senkrecht zur Darstellungsebene) schwenkbar mit dem ersten Blockteil 24 verbunden ist. Durch eine Schwenkbewegung im Uhrzeigersinn kann ersichtlich die Außenfläche 36 des zweiten Scharnierelements 26 näher an die Tür 2 oder die Außenfläche 34 des ersten Blockteils 24 herangeführt werden und dadurch die vorstehend beschriebene Längenabmessung L des Blockelements 18 verringert werden, während eine Schwenkbewegung im Gegenuhrzeigersinn die Längenabmessung L vergrößert.

Das zweite Blockteil 26 weist einen Fixierungsschenkel 46 auf, der mit einer zylindermantelförmigen Innenfläche 48 versehen ist, wobei die Zylinderachse mit der Scharnierachse 44 übereinstimmt.

Ein Verriegelungskeil 50 ist mittels einer im Querschnitt T-förmigen Führungsleiste 52 in einer entsprechenden Führungsnut 54 des ersten Blockteils 24 in vertikaler Richtung (senkrecht zur Fahrtrichtung) verschieblich geführt und weist eine sich nach oben konisch erweiternde Außenfläche 56 auf, so daß durch Eintreiben des Verriegelungskeils in vertikaler Richtung von oben nach unten eine Klemm- und Verriegelungswirkung zwischen Außenfläche 56 und Innenfläche 48 und damit zwischen zweitem Blockteil, Verriegelungskeil und erstem Blockteil erreichbar ist.

Vorteilhafterweise sind in dem zweiten Blockteil 26 Sicherungsschrauben 58 vorgesehen, deren Längsachse tangential zur Scharnierachse 44 verläuft und die gegen eine radial zur Scharnierachse 44 verlaufende Sicherungsfläche 60 des Verriegelungskeils 50 anlegbar sind.

Weiterhin kann ein nicht dargestelltes Federelement vorgesehen sein, um die Blockteile 24, 26 in Richtung einer maximalen Längenabmessung auseinanderzudrücken, d.h. um in Fig. 8 das zweite Blockteil 26 relativ zu dem ersten Blockteil 24 im Gegenuhrzeigersinn vorzuspannen.

Zur Montage des in Fig. 8 dargestellten Blockelements 18 wird die Fahrzeugtür 2 mit dem daran angebrachten, vormontierten bzw. im Ausgangszustand befindlichen Blockelement 18 geschlossen, wobei sich auch hier auf der Außenfläche 36 des zweiten Blockelements 26 eine Abstandsfolie befinden kann. Anschließend wird der Verriegelungskeil 50 in die Führungsnut 54 eingesetzt und von oben so weit eingetrieben, daß eine feste Blockierungswirkung zwischen den beiden Blockteilen erreicht ist. Anschließend werden die Sicherungsschrauben 58, die im Ausgangszustand zurückgedreht waren, eingedreht und gegen die Sicherungsfläche 60 angelegt, so daß eine zusätzliche Sicherheit gegen unerwünschte Zurückverlagerung des Blockteils 26 im Falle eines Aufpralls besteht.

### Bezugszeichenliste

- 1: Kraftfahrzeug
- 2: Fahrzeugtür
- 4: A-Säule
- 6: Windschutzscheibenrahmen
- 10: vordere Stirnseite (von 2)
- 12: Außenseite (von 4)
- 14: Zwischenraum
- 16: Dichtung
- 18: Blockelement
- 20: Fahrtrichtung
- 22: Kraftaufnahmerichtung
- 24, 26: Blockteil
- 24a, 26a: ineinandergreifender Bereich
- 28: Befestigungsschraube
- 30, 32: Verlagerungsrichtung
- 34: Außenfläche (von 24)
- 36: Außenfläche (von 26)
- 38: Feder
- 40: Abstandsfolie
- 44: Schwenkachse
- 46: Fixierungsschenkel (von 26)
- 48: Innenfläche (von 26)
- 50: Verriegelungskeil
- 52: Führungsleiste
- 54: Führungsnut
- 56: Außenfläche (von 50)
- 58: Sicherungsschraube
- 60: Sicherungsfläche (von 50)

- L: Längenabmessung (von 18)
- L1: Längenabmessung (von 14)
- H: Höhe (von 18)
- d: Dicke (von 40)

## Patentansprüche

1. Verfahren zum Erhöhen der Crashfestigkeit eines Kraftfahrzeugs (1), bei dem in einem Zwischenraum (14) zwischen einer vorderen, einer A-Säule benachbarten Stirnseite (10) einer seitlichen Fahrzeugtür (2) und einer dieser gegenüberliegenden Außenseite (12) der A-Säule (4) ein den Zwischenraum (14) bei geschlossener Fahrzeugtür (2) überbrückendes Blockelement (18) angeordnet wird, mit den Schritten:
- Bereitstellen eines Blockelements (18), das zwei Blockteile (24, 26) aufweist, die so miteinander verbunden sind, daß sie in einem Ausgangszustand unter Einwirkung einer Einstellkraft relativ zueinander verlagerbar sind, wodurch eine Längenabmessung (L) des Blockelements (18) einstellbar ist, und die relativ zueinander fixierbar sind (Einbauzustand), so daß eine in Richtung der Längenabmessung (L) oder Kraftaufnahmerichtung (22) einwirkende, bei einem Aufprall auftretende Kraft aufnehmbar ist,
- Anbringen des Blockelements (18) bei geöffneter Fahrzeugtür (2), wobei eines der Blockteile (24, 26) an der Stirnseite (10) der Fahrzeugtür (2) oder an der Außenseite (12) der A-Säule (4) befestigt wird und wobei die Blockteile (24, 26) relativ zueinander so angeordnet sind, daß das Blockelement (18) eine größere Längenabmessung (L) aufweist als der Zwischenraum (14) bei geschlossener Fahrzeugtür (2),
- Schließen der Fahrzeugtür (2), wobei das andere Blockteil (26, 24) an die A-Säule (4) oder Fahrzeugtür (2) anstößt und die Blockteile (24, 26) selbsttätig relativ zueinander in eine Montageposition verlagert werden, in der sie bei geschlossener Fahrzeugtür (2) den Zwischenraum (14) im wesentlichen vollständig überbrücken, und
- Fixieren der Blockteile (24, 26) relativ zueinander in der Montageposition.

2. Verfahren nach Anspruch 1, **dadurch gekennzeichnet, daß** die Blockteile im wesentlichen ebene oder eine ebene und eine leicht ballig (nach außen konvex) geformte Außenfläche(n) (34, 36) aufweisen, mit denen sie gegen die Fahrzeugtür (2) und die A-Säule (4) anliegen oder dieser mit geringem Abstand gegenüberstehen.

3. Verfahren nach Anspruch 2, **dadurch gekennzeichnet, daß** die Außenflächen (34, 36) im wesentlichen parallel sind.

4. Verfahren nach einem der vorangehenden Ansprüche, **dadurch gekennzeichnet, daß** die Blockteile (24, 26) keilartig ausgebildet sind, wobei die Längenabmessung (L) des Blockelements (18) eingestellt wird, indem die Blockteile (24, 26) unter einem Winkel zur Kraftaufnahmerichtung (22) des Blockelements (18) relativ zueinander verlagert werden (30, 32).

5. Verfahren nach einem der vorangehenden Ansprüche, **dadurch gekennzeichnet, daß** die Blockteile (24, 26) ineinandergreifende Bereiche (24a, 26a) aufweisen, entlang der sie relativ zueinander verlagert werden, um die Längenabmessung (L) des Blokkelements (18) einzustellen.

6. Verfahren nach einem der vorangehenden Ansprüche, **dadurch gekennzeichnet, daß** die Blockteile (24, 26) mittels mindestens einer Schraube (28) in der Montageposition relativ zueinander fixiert werden.

7. Verfahren nach Anspruch 6, **dadurch gekennzeichnet, daß** mit der mindestens einen Schraube (28) das Blockelement (18) gleichzeitig an der Fahrzeugtür (2) oder an der A-Säule (4) angebracht wird.

8. Verfahren nach einem der vorangehenden Ansprüche, **dadurch gekennzeichnet, daß** die Blockteile (24, 26) durch Schweißen in der Montageposition relativ zueinander fixiert werden.

9. Verfahren nach einem der vorangehenden Ansprüche, **dadurch gekennzeichnet, daß** vor dem Fixieren auf einer Außenfläche (36, 34) des anderen, nicht angebrachten Blockteils (26, 24) eine Abstandsfolie (40) aufgebracht und nach dem Fixieren entfernt wird, um einen Kontakt der Außenfläche (36, 34) mit einer lackierten Oberfläche der A-Säule (4) oder der Fahrzeugtür (2) zu vermeiden.

10. Blockelement (18) als Crashabstützung bei einem Kraftfahrzeug (1) zum Überbrücken eines Zwischenraums (14) zwischen einer vorderen, einer A-Säule (4) benachbarten Stirnseite (10) einer seitlichen Fahrzeugtür (2) und einer dieser gegenüberliegenden Außenseite (12) der A-Säule (4), mit zwei Blockteilen (24, 26), die so miteinander verbunden sind, daß sie in einem Ausgangszustand unter Einwirkung einer Einstellkraft relativ zueinander verlagerbar sind, wodurch eine Längenabmessung (L) des Blockelements (18) einstellbar ist, und die relativ zueinander in einer Montageposition fixierbar sind, so daß in einem Einbauzustand eine in Richtung der Längenabmessung (L) oder Kraftaufnahmerichtung (22) einwirkende, bei einem Aufprall auftretende Kraft aufnehmbar ist.

11. Blockelement (18) nach Anspruch 10, **dadurch gekennzeichnet, daß** die Blockteile (24, 26) im wesentlichen ebene oder eine ebene und eine leicht ballig (nach außen konvex) geformte Außenfläche(n) (34, 36) aufweisen, mit denen sie gegen die Fahrzeugtür (2) und die A-Säule (4) anliegen oder dieser mit minimalem Abstand gegenüberliegen.

12. Blockelement (18) nach Anspruch 11, **dadurch gekennzeichnet, daß** die Außenflächen (34, 36) im wesentlichen parallel zueinander sind.

13. Blockelement (18) nach einem der Ansprüche 10 bis 12, **dadurch gekennzeichnet, daß** die Blockteile (24, 26) keilartig ausgebildet sind, wobei die Längenabmessung (L) des Blockelements (18) durch Verlagerung der Blockteile (24, 26) relativ zueinander unter einem Winkel zur Kraftaufnahmerichtung (22) einstellbar ist.

14. Blockelement (18) nach einem der Ansprüche 10 bis 13, **dadurch gekennzeichnet, daß** die Blockteile (24, 26) ineinandergreifende Bereiche (24a, 26a) aufweisen, entlang der sie relativ zueinander verlagerbar sind, wodurch die Längenabmessung (L) des Blockelements (18) einstellbar ist.

15. Blockelement (18) nach einem der Ansprüche 13 oder 14, **dadurch gekennzeichnet, daß** zusammenwirkende Flächen, entlang denen die Blockteile (24, 26) verlagerbar sind, insbesondere Keilflächen, mit Rastvorsprüngen oder Riffelungen versehen sind, um eine unerwünschte Verlagerung im Einbauzustand zu vermeiden.

16. Blockelement (18) nach einem der Ansprüche 10 bis 15, **dadurch gekennzeichnet, daß** die Blockteile (24, 26) mittels mindestens einer Schraube (28) in der Montageposition relativ zueinander fixierbar sind.

17. Blockelement (18) nach Anspruch 16, **dadurch gekennzeichnet, daß** das Blockelement (18) mit der mindestens einen Schraube (28) gleichzeitig an der Fahrzeugtür (2) oder der A-Säule (4) anbringbar ist.

18. Blockelement (18) nach einem der Ansprüche 10 bis 17, **dadurch gekennzeichnet, daß** die Blockteile (24, 26) durch Schweißen in der Montageposition relativ zueinander fixierbar sind.

19. Blockelement (18) nach einem der Ansprüche 10 bis 16, **dadurch gekennzeichnet, daß** die Blockteile (24, 26) im Ausgangszustand an einer Scharnierachse (44) schwenkbar zur Veränderung der Längenabmessung (L) miteinander verbunden sind und mittels eines Verriegelungskeils (50) relativ zueinander in der Montageposition fixierbar sind.

20. Blockelement (18) nach Anspruch 19, **dadurch gekennzeichnet, daß** der Verriegelungskeil (50) eine insbesondere T-förmige Führungsleiste (52) aufweist, mit der er in einer entsprechenden Führungsnut (54) eines der Blockteile (24, 26) gehalten und geführt ist.

21. Blockelement (18) nach Anspruch 19 oder 20, **dadurch gekennzeichnet, daß** der Verriegelungskeil (50) eine kegelmantelsegmentförmige oder zylindrische Außenfläche (56) aufweist, mit der er mit einer zylindrischen oder kegelmantelsegmentförmigen Innenfläche (48) eines der Blockteile (24, 26) blockierend zusammenwirkt.

22. Blockelement (18) nach einem der Ansprüche 19 bis 21, **dadurch gekennzeichnet, daß** der Verriegelungskeil (50) eine weitere, bzgl. der Schwenkachse (44) radial verlaufende Sicherungsfläche (60) aufweist, wobei in einem der Blockteile (24, 26) mindestens eine bzgl. der Scharnierachse (44) tangential verlaufende Sicherungsschraube (58) angeordnet ist, die in der Montageposition gegen die Sicherungsfläche (60) anlegbar ist und zur Aufnahme einer bei einem Aufprall auftretenden Kraft beiträgt.

23. Blockelement (18) nach einem der Ansprüche 10 bis 22, **dadurch gekennzeichnet, daß** zwischen den Blockteilen (24, 26) ein Federelement (38) angeordnet ist, um die Blockteile (24, 26) im Ausgangszustand in eine Position maximaler Längenabmessung (L) zu bringen.

24. Kraftfahrzeug (1) mit einer hinter einer A-Säule (4) angeordneten seitlichen Fahrzeugtür (2), bei dem in einem Zwischenraum (14) zwischen einer vorderen Stirnseite (10) der Fahrzeugtür (2) und einer dieser gegenüberliegenden Außenseite (12) der A-Säule (4) ein den Zwischenraum (14) bei geschlossener Fahrzeugtür überbrückendes Blockelement als Crashabstützung angeordnet ist, **gekennzeichnet durch** ein Blockelement (18) nach einem der Ansprüche 10 bis 23, wobei eines der Blockteile (24, 26) an der Stirnseite (10) der Fahrzeugtür (2) oder an der Außenseite (12) der A-Säule (4) befestigt ist und das Blockelement (18) den Zwischenraum (14) bei geschlossener Fahrzeugtür (2) vollständig oder bis auf einen minimalen Spalt (d) überbrückt.

## Claims

1. A method for increasing the crash resistance of a motor vehicle (1), in which, in a space (14) between a side vehicle door (2) front face (10), which is adjacent an A-column, and an outer side (12) of the A-column (4) lying opposite this, there is arranged a block member (18) which bridges the space (14) when the vehicle door (2) is closed, with the steps of:
- providing a block member (18) having two block parts (24, 26) which are connected to one another such that, in a starting state, they are displaceable under the action of an adjusting force relative to one another, as a result of which a length dimension (L) of the block member (18) is adjustable, and which are able to be fixed relative to one another (installation state), such that a force which acts in the direction of the length dimension (L) or the force absorption direction (22) and which arises when an impact occurs, can be absorbed,
- attaching the block member (18) when the vehicle door (2) is opened, wherein one of the block parts (24, 26) is secured to the face (10) of the vehicle door (2) or to the outer side (12) of the A-column (4) and wherein the block parts (24, 26) are arranged relative to one another such that the block member (18) has a larger length dimension (L) than the space (14) when the vehicle door (2) is closed,
- closing the vehicle door (2), wherein the other block part (26, 24) abuts the A-column (4) or vehicle door (2) and the block parts (24, 26) are automatically displaced relative to one another into a mounting position in which they substantially entirely bridge the space (14) when the vehicle door (2) is closed, and
- fixing the block parts (24, 26) relative to one another in the mounting position.

2. The method according to claim 1, **characterised in that** the block parts have substantially even outer surfaces (34, 36) or an even and a slightly roundedly (outwardly convex) shaped outer surface (34, 36) with which they lie against the vehicle door (2) and the A-column (4) or lie opposite these with a small gap.

3. The method according to claim 2, **characterised in that** the outer surfaces (34, 36) are substantially parallel.

4. The method according to one of the preceding claims, **characterised in that** the block parts (24, 26) are configured in a wedge shape, wherein the length dimension (L) of the block member (18) is adjusted by displacing the block parts (24, 26) relative to one another (30, 32) at an angle to the force absorption direction (22) of the block member (18).

5. The method according to one of the preceding claims, **characterised in that** the block parts (24, 26) have engaging areas (24a, 26a), along which they are displaced relative to one another, in order to adjust the length dimension (L) of the block member (18).

6. The method according to one of the preceding claims, **characterised in that** the block parts (24, 26) are fixed relative to one another in the mounting position by means of at least one screw (28).

7. The method according to claim 6, **characterised in that**, by means of the at least one screw (28), the block member (18) is simultaneously attached to the vehicle door (2) or to the A-column (4).

8. The method according to one of the preceding claims, **characterised in that** the block parts (24, 26) are fixed relative to one another in the mounting position by means of welding.

9. The method according to one of the preceding claims, **characterised in that**, prior to the fixing, a spacer (40) is applied onto an outer surface (36, 34) of the other, unattached, block part (26, 24) and is removed after fixing in order to avoid a contacting of the outer surface (36, 34) with a painted surface of the A-column (4) or the vehicle door (2).

10. A block member (18) as crash support in a motor vehicle (1) for bridging a space (14) between a side vehicle door (2) front face (10), which is adjacent an A-column (4), and an outer side (12) of the A-column (4), lying opposite this, with two block parts (24, 26) which are connected to one another such that, in a starting state, they are displaceable under the action of an adjusting force relative to one another, as a result of which a length dimension (L) of the block member (18) is adjustable, and which are able to be fixed relative to one another in a mounting position, such that, in an installation state, a force which acts in the direction of the length dimension (L) or the force absorption direction (22) and which arises when an impact occurs, can be absorbed.

11. The block member (18) according to claim 10, **characterised in that** the block parts (24, 26) have substantially even outer surfaces (34, 36) or an even and a slightly roundedly (outwardly convex) shaped outer surface (34, 36) with which they lie against the vehicle door (2) and the A-column (4) or lie opposite these with a minimal gap.

12. The block member (18) according to claim 11, **characterised in that** the outer surfaces (34, 36) are substantially parallel to one another.

13. The block member (18) according to one of claims 10 to 12, **characterised in that** the block parts (24, 26) are configured in a wedge shape, wherein the length dimension (L) of the block member (18) can be adjusted by displacing the block parts (24, 26) relative to one another at an angle to the force absorption direction (22).

14. The block member (18) according to one of claims 10 to 13, **characterised in that** the block parts (24, 26) have engaging areas (24a, 26a), along which they can be displaced relative to one another, by means of which the length dimension (L) of the block member (18) can be adjusted.

15. The block member (18) according to one of claims 13 or 14, **characterised in that** cooperating surfaces, along which the block parts (24, 26) are displaceable, in particular wedge surfaces, are provided with catching protrusions or ribbings in order to avoid undesired displacement in the installation state.

16. The block member (18) according to one of claims 10 to 15, **characterised in that** the block parts (24, 26) can be fixed relative to one another in the mounting position by means of at least one screw (28).

17. The block member (18) according to claim 16, **characterised in that** by means of the at least one screw (28), the block member (18) is simultaneously attached to the vehicle door (2) or to the A-column (4).

18. The block member (18) according to one of claims 10 to 17, **characterised in that** the block parts (24, 26) can be fixed relative to one another in the mounting position by means of welding.

19. The block member (18) according to one of claims 10 to 16, **characterised in that** the block parts (24, 26), in the starting state, are pivotably connected to one another at a hinge axle (44) in order to alter the length dimension (L) and are able to be fixed in the mounting position relative to one another by means of a locking wedge (50).

20. The blocking member (18) according to claim 19, **characterised in that** the locking wedge (50) has an in particular T-shaped guide strip (52) by means of which it is held and guided in a suitable guiding groove (54) of one of the block parts (24, 26).

21. The block member (18) according to claim 19 or 20, **characterised in that** the locking wedge (50) has an outer surface (56) which is cone envelope segment-shaped or cylindrical and with which it cooperates in a blocking manner with an inner surface (48) of one of the blocking parts (24, 26), said inner surface (48) being cylindrical or cone envelope segment-shaped.

22. The blocking member (18) according to one of claims 19 to 21, **characterised in that** the locking wedge (50) has a further securing surface (60) which runs radially in respect of the pivot axle (44), wherein there is arranged in one of the block parts (24, 26) at least one securing screw (58), which runs tangentially in respect of the hinge axle (44) and which, in the mounting position, can be applied against the securing surface (60) and contributes to the absorption of a force which arises in the event of impact.

23. The block member (18) according to one of claims 10 to 22, **characterised in that** a spring member (38) is arranged between the block parts (24, 26) in order to bring the block parts (24, 26) in the starting state into a position with a maximum length dimension (L).

24. A motor vehicle (1) with a side vehicle door (2) arranged behind an A-column (4), in which motor vehicle (1) a block member, which bridges the space (14) when the vehicle door is closed, is arranged, as crash support, in a space (14) between a front face (10) of the vehicle door (2) and an A-column (4) outer side (12) facing this, **characterised by** a block member (18) according to one of claims 10 to 23, wherein one of the block parts (24, 26) is secured to the face (10) of the vehicle door (2) or to the outer side (12) of the A-column (4) and the block member (18), when the vehicle door (2) is closed, bridges the space (14) entirely or to the extent that only a small gap (d) remains.

## Revendications

1. Procédé pour accroître la résistance à la collision d'un véhicule automobile (1), dans lequel, dans un espace intermédiaire (14) entre un côté frontal avant (10) adjacent à une colonne A d'une porte de véhicule latérale (2) et un côté extérieur (12), opposé à celui-ci, de la colonne A (4), on dispose un élément de blocage (18) surmontant l'espace intermédiaire (14) lorsque la porte du véhicule (2) est fermée, comprenant les étapes suivantes :
- fourniture d'un élément de blocage (18) qui présente deux pièces de blocage (24, 26), qui sont connectées l'une à l'autre de telle sorte que dans un état initial, elles puissent être déplacées l'une par rapport à l'autre sous l'effet d'une force d'ajustement, de sorte qu'une dimension en longueur (L) de l'élément de blocage (18) puisse être ajustée, et qui peuvent être fixées l'une par rapport à l'autre (état monté) de telle sorte qu'une force produite dans la direction de la dimension en longueur (L) ou dans la direction de réception de la force (22), et produite dans le cas d'une collision, puisse être reçue,
- montage de l'élément de blocage (18) lorsque la porte du véhicule (2) est ouverte, l'une des pièces de blocage (24, 26) étant fixée sur le côté frontal (10) de la porte du véhicule (2) ou sur le côté extérieur (12) de la colonne A (4) et les pièces de blocage (24, 26) étant disposées l'une par rapport à l'autre de telle sorte que l'élément de blocage (18) présente une dimension en longueur (L) plus importante que l'espace intermédiaire (14) lorsque la porte du véhicule (2) est fermée,
- fermeture de la porte du véhicule (2), l'autre pièce de blocage (26, 24) butant contre la colonne A (4) ou la porte du véhicule (2) et les pièces de blocage (24, 26) étant déplacées automatiquement l'une par rapport à l'autre dans une position de montage dans laquelle elles surmontent substantiellement complètement l'espace intermédiaire (14) lorsque la porte du véhicule (2) est fermée, et
- fixation des pièces de blocage (24, 26) l'une par rapport à l'autre dans la position de montage.

2. Procédé selon la revendication 1, **caractérisé en ce que** les pièces de blocage présentent des surfaces extérieures essentiellement planes ou une surface extérieure plane et une surface extérieure légèrement bombée (convexe vers l'extérieur) (34, 36), avec lesquelles elles s'appliquent contre la porte du véhicule (2) et la colonne A (4) ou en face desquelles elles se tiennent à faible distance.

3. Procédé selon la revendication 2, **caractérisé en ce que** les surfaces extérieures (34, 36) sont essentiellement parallèles.

4. Procédé selon l'une quelconque des revendications précédentes, **caractérisé en ce que** les pièces de blocage (24, 26) sont réalisées en forme de clavettes, la dimension en longueur (L) de l'élément de blocage (18) étant ajustée en déplaçant (30, 32) les pièces de blocage (24, 26) l'une par rapport à l'autre suivant un angle par rapport à la direction de réception de force (22) de l'élément de blocage (18).

5. Procédé selon l'une quelconque des revendications précédentes, **caractérisé en ce que** les pièces de blocage (24, 26) présentent des régions s'emboîtant l'une dans l'autre (24a, 26a) le long desquelles elles sont déplacées l'une par rapport à l'autre, afin d'ajuster la dimension en longueur (L) de l'élément de blocage (18).

6. Procédé selon l'une quelconque des revendications précédentes, **caractérisé en ce que** les pièces de blocage (24, 26) sont fixées l'une par rapport à l'autre au moyen d'au moins une vis (28) dans la position de montage.

7. Procédé selon la revendication 6, **caractérisé en ce que** l'élément de blocage (18) est monté simultanément à la porte du véhicule (2) ou à la colonne A (4) avec l'au moins une vis (28).

8. Procédé selon l'une quelconque des revendications précédentes, **caractérisé en ce que** les pièces de blocage (24, 26) sont fixées l'une par rapport à l'autre par soudage dans la position de montage.

9. Procédé selon l'une quelconque des revendications précédentes, **caractérisé en ce qu'**avant la fixation sur une surface extérieure (36, 34) de l'autre pièce de blocage non montée (26, 24), une feuille d'espacement (40) est appliquée et est enlevée après la fixation, afin d'éviter un contact de la surface extérieure (36, 34) avec une surface laquée de la colonne A (4) ou de la porte du véhicule (2).

10. Elément de blocage (18) servant de support en cas de collision dans un véhicule automobile (1) pour surmonter un espace intermédiaire (14) entre un côté frontal avant (10) adjacent à une colonne A d'une porte de véhicule latérale (2) et un côté extérieur (12), opposé à celui-ci, de la colonne A (4), comprenant deux pièces de blocage (24, 26), qui sont connectées l'une à l'autre de telle sorte que dans un état initial, elles puissent être déplacées l'une par rapport à l'autre sous l'effet d'une force d'ajustement, de sorte qu'une dimension en longueur (L) de l'élément de blocage (18) puisse être ajustée, et qui peuvent être fixées l'une par rapport à l'autre dans une position de montage de telle sorte que dans un état monté, une force produite dans la direction de la dimension en longueur (L) ou dans la direction de réception de la force (22), et produite dans le cas d'une collision, puisse être reçue.

11. Elément de blocage (18) selon la revendication 10, **caractérisé en ce que** les pièces de blocage (24, 26) présentent des surfaces extérieures essentiellement planes ou une surface extérieure plane et une surface extérieure légèrement bombée (convexe vers l'extérieur) (34, 36), avec lesquelles elles s'appliquent contre la porte du véhicule (2) et la colonne A (4) ou en face desquelles elles se tiennent à faible distance.

12. Elément de blocage (18) selon la revendication 11, **caractérisé en ce que** les surfaces extérieures (34, 36) sont essentiellement parallèles l'une à l'autre.

13. Elément de blocage (18) selon l'une quelconque des revendications 10 à 12, **caractérisé en ce que** les pièces de blocage (24, 26) sont réalisées en forme de clavettes, la dimension en longueur (L) de l'élément de blocage (18) pouvant être ajustée en déplaçant les pièces de blocage (24, 26) l'une par rapport à l'autre suivant un angle par rapport à la direction de réception de force (22).

14. Elément de blocage (18) selon l'une quelconque des revendications 10 à 13, **caractérisé en ce que** les pièces de blocage (24, 26) présentent des régions s'emboîtant l'une dans l'autre (24a, 26a) le long desquelles elles peuvent être déplacées l'une par rapport à l'autre, de sorte que la dimension en longueur (L) de l'élément de blocage (18) puisse être ajustée.

15. Elément de blocage (18) selon l'une quelconque des revendications 13 ou 14, **caractérisé en ce que** des surfaces coopérantes, le long desquelles les pièces de blocage (24, 26) peuvent être déplacées, notamment des surfaces en forme de clavettes, sont pourvues de saillies d'encliquetage ou de cannelures, afin d'éviter un déplacement indésirable dans l'état monté.

16. Elément de blocage (18) selon l'une quelconque des revendications 10 à 15, **caractérisé en ce que** les pièces de blocage (24, 26) peuvent être fixées l'une par rapport à l'autre au moyen d'au moins une vis (28) dans la position de montage.

17. Elément de blocage (18) selon la revendication 16, **caractérisé en ce que** l'élément de blocage (18) peut être monté simultanément à la porte du véhicule (2) ou à la colonne A (4) avec l'au moins une vis (28).

18. Elément de blocage (18) selon l'une quelconque des revendications 10 à 17, **caractérisé en ce que** les pièces de blocage (24, 26) peuvent être fixées l'une par rapport à l'autre par soudage dans la position de montage.

19. Elément de blocage (18) selon l'une quelconque des revendications 10 à 16, **caractérisé en ce que** les pièces de blocage (24, 26), dans l'état initial, sont connectées l'une à l'autre au niveau d'un axe de charnière (44) de manière pivotante pour modifier la dimension en longueur (L) et peuvent être fixées au moyen d'une clavette de verrouillage (50) l'une par rapport à l'autre dans la position de montage.

20. Elément de blocage (18) selon la revendication 19, **caractérisé en ce que** la clavette de verrouillage (50) présente une nervure de guidage (52) notamment en forme de T, avec laquelle elle est maintenue et guidée dans une rainure de guidage correspondante (54) de l'une des pièces de blocage (24, 26).

21. Elément de blocage (18) selon la revendication 19 ou 20, **caractérisé en ce que** la clavette de verrouillage (50) présente une surface extérieure (56) cylindrique ou en forme de segment d'enveloppe conique, avec laquelle elle coopère par blocage avec une surface intérieure (48) cylindrique ou en forme de segment d'enveloppe conique de l'une des pièces de blocage (24, 26).

22. Elément de blocage (18) selon l'une quelconque des revendications 19 à 21, **caractérisé en ce que** la clavette de verrouillage (50) présente une autre surface de fixation (60) s'étendant radialement par rapport à l'axe de pivotement (44), au moins une vis de fixation (58) s'étendant tangentiellement par rapport à l'axe de charnière (44) étant disposée dans l'une des pièces de blocage (24, 26), la vis de fixation pouvant être appliquée dans la position de montage contre la surface de fixation (60) et contribuant à recevoir une force produite en cas de collision.

23. Elément de blocage (18) selon l'une quelconque des revendications 10 à 22, **caractérisé en ce qu'**un élément de ressort (38) est disposé entre les pièces de blocage (24, 26), afin d'amener les pièces de blocage (24, 26) dans l'état initial dans une position de dimension en longueur maximale (L).

24. Véhicule automobile (1) comprenant une porte de véhicule latérale (2) disposée derrière une colonne A (4), dans lequel, dans un espace intermédiaire (14) entre un côté frontal avant (10) de la porte de véhicule (2) et un côté extérieur (12) de la colonne A (4), opposé à celui-ci, est disposé un élément de blocage surmontant l'espace intermédiaire (14) lorsque la porte de véhicule est fermée, et servant de support en cas de collision, **caractérisé par** un élément de blocage (18) selon l'une quelconque des revendications 10 à 23, l'une des pièces de blocage (24, 26) étant fixée au côté frontal (10) de la porte du véhicule (2) ou au côté extérieur (12) de la colonne A (4) et l'élément de blocage (18) surmontant complètement, ou en laissant une fente minimale (d), l'espace intermédiaire (14) lorsque la porte de véhicule (2) est fermée.
